# EUROPEAN PATENT APPLICATION

(11) **EP 4 345 080 A1**
(43) Date of publication of application: **03.04.2024**
(21) Application number: 22198430.5
(22) Date of filing: 28.09.2022
(51) Int. Cl.: C04B 28/04, C04B 40/00

(54) **MITIGATING ADVERSE EFFECTS OF ETTRINGITE IN MINERAL BINDER COMPOSITIONS**

(71) Applicant: Sika Technology AG, 6340 Baar (CH)
(72) Inventor: CHAPELAT, Julien, 2502 Bienne (CH); JUILLAND, Patrick, 3005 Bern (CH); GALLUCCI, Emmanuel, 8048 Zürich (CH)
(74) Representative: Sika Patent Attorneys

(57) **Abstract**

A polymer **P** is used for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition, said polymer **P** comprising:
a) at least one monomer unit **M1** of formula I:

CH₂=CHNRCOR' (I)

whereby R and R' independently of each other is a hydrogen atom or a methyl group, or where R and R' together form an alkylene chain so as to provide, together with the N atom and the C atom to which they are attached, a cyclic structure, especially a five membered ring;
b) optionally at least one further monomer unit **M2.**

## Description

### Technical field

The invention relates to the use of a polymer for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition.

### Background art

Dispersants or superplasticizers are used in the building industry as plasticizers or water-reducing agents for mineral binder compositions, such as for example concrete, cement mortar, plaster, or lime mortar. The dispersants are generally organic polymers which are added to the mixing water or admixed with the binder compositions in solid form. In this way, it is advantageously possible to alter both, the consistency of the binder composition during processing and the properties in the hardened state.

Known particularly effective dispersants are, for example, polymers based on polycarboxylate ethers (PCE). Polymers of this kind have a polymer backbone and side chains bonded thereto. Corresponding polymers are described, for example, in EP 1 138 697 A1 (Sika AG).

Furthermore, EP 0 757 998 A2 (Showa Denko Kabashiki Kaisha) describes N-vinylcarboxylic amide-based water soluble polymers for providing high flowability in combination with self-compactability and segregation resistance to fresh mortar compositions. These polymers can also be used together with water-reducing agents.

However, the effectiveness of dispersants is depending on the nature of the dispersants as well as the specific components of the mineral minder compositions. For example, the presence of certain contaminants, such as e.g. swelling clays, even in very low amounts, may affect the effectiveness of PCE-based admixtures in mortar or concrete production.

Also, the composition of the mineral binder and the hydration kinetics may affect the effectiveness of dispersants. For example, in terms of workability of cement based materials, aluminate reactions, in particular ettringite formation, is of major importance. Especially, a too fast ettringite formation is known to have negative impacts on the rheology of mineral binder compositions and the effectiveness of dispersants.

In order to overcome this problem, hydration control chemicals such as e.g. retarders are used. These are for example carboxylic acids, sugars, phosphonates and the like. EP 3 468 936 B1 (BASF SE) described for example the use of a special acid compound in combination with organic carbonates for retarding the hydration reaction of aluminate-containing clinker phases. This avoids a too rapid setting of mortar and concrete pastes and ensures a sufficient open time, which allows processing the pastes as desired.

However, hydration control chemicals usually affect the hydration reaction as a whole. This results in a significantly slower hardening of the mineral binder compositions. For certain applications, this is undesired.

There is thus a need to develop new and improved solutions that reduce or overcome the aforementioned drawbacks.

### Disclosure of the invention

It is an objective of the present invention to provide substances and methods which allow for reducing or preventing problems with aluminate reactions, especially with ettringite formation, in mineral binder compositions. Desirably, the solutions shall reduce the negative influence of a fast ettringite formation on the effectiveness of dispersants, in particular of polycarboxylate ether-based dispersants. Thereby, preferably, the hydration of the mineral binder composition or the hardening time, respectively, should be affected as little as possible. Particularly, the substances or methods shall be compatible with common additives used for producing mineral binder compositions, or with corresponding processes, respectively. Especially, the substances or methods shall be compatible with lignosulfonates, gluconates, naphthalenesulfonates, sulfonated naphthalene-formaldehyde condensates, melamine sulfonates, vinyl copolymers, sulfonated vinyl copolymers, and/or polycarboxylates, especially polycarboxylate ethers. In particular, the substances or methods shall be compatible with PCE-based dispersants.

Surprisingly, it has been found that the objective of the invention can be achieved by the features of claim 1. Thus, the core of the invention is the use of a polymer **P** for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition, said polymer **P** comprising:
a) at least one monomer unit **M1** of formula I:

   CH₂=CHNRCOR' (I)

   whereby R and R' independently of each other is a hydrogen atom or a methyl group, or where R and R' together form an alkylene chain so as to provide, together with the N atom and the C atom to which they are attached, a cyclic structure, especially a five membered ring;
b) optionally at least one further monomer unit **M2**.

As has been shown, the inventive polymers **P** allow to significantly improve the effectiveness of a dispersant, in particular a polycarboxylate ether-based dispersant, in a mineral binder composition forming and/or comprising ettringite, and/or to reduce or inhibit adverse effects of ettringite on the effectiveness of a dispersant in a mineral binder composition.

Without wishing to be bound by theory, it is believed that the polymers **P** are adsorbed on ettringite more readily than dispersants, such as e.g. polycarboxylate ether-based dispersants. Therefore, when making use of the inventive polymers **P,** the adsorption capacity of ettringite towards dispersants can be reduced or eliminated. Also it might be that polymers **P** act as a co-surfactant with the dispersant, shielding the latter from ettringite. The precise mechanism might depend on the nature of the mineral binder compositions and the specific nature of polymer **P** used. Regardless of the mechanism, however, the effectiveness of the dispersants is less or not at all affected by the ettringite.

The inventive solution turned out to be highly robust and the polymers **P** only have little or no effect on the hydration of mineral binder compositions. In particular, the polymers **P** hardly affect the hardening process of the mineral binder composition.

Additionally, the inventive polymers **P** as such hardly affect the slump flow of mineral binder compositions. Therefore, dosages of the dispersants can be kept within established ranges. This in turn reduces the need for additional adjustments of the formulation of the mineral binder composition.

Also, the polymers **P** are well compatible with common additives used for producing mineral binder compositions, or with corresponding processes, respectively. Common additives include for example dispersants, accelerators, retarders, shrinkage reducers and/or process chemicals typically used in mortar and concrete compositions.

Compatibility in particular is given with dispersants selected from lignosulfonates, gluconates, naphthalenesulfonates, sulfonated naphthalene-formaldehyde condensates, melamine sulfonates, vinyl copolymers, sulfonated vinyl copolymers, and polycarboxylate ethers. Thereby, polycarboxylate ether are most interesting since they usually have very pronounced dispersive effects.

Further aspects of the invention are the subject matter of other independent claims. Especially preferred embodiments of the invention are the subject matter of the dependent claims.

### Ways of carrying out the invention

A first aspect of the invention relates to the use of a polymer **P** for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition, said polymer **P** comprising:
a) at least one monomer unit **M1** of formula I:

   CH₂=CHNRCOR' (I)

   whereby R and R' independently of each other is a hydrogen atom or a methyl group, or where R and R' together form an alkylene chain so as to provide, together with the N atom and the C atom to which they are attached, a cyclic structure, especially a five membered ring;
b) optionally at least one further monomer unit **M2**.

According to the invention, the polymer **P** is in particular used to inert ettringite against adsorption of dispersants, in particular polycarboxylate ether-based dispersants.

Within the present context, a "polymer" is a substance comprising or consisting of at least 2, especially at least 3, preferably at least 5, polymerized monomer units.

Especially, the polymers **P** are used for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition within a period of 1 hour, especially 30 minutes, in particular 10 minutes, after mixing of the mineral binder composition with water. In these periods, early C₃A-CaSO₄ hydration takes place, which is most critical with regard to a fast ettringite formation.

"Improving the effectiveness of a dispersant" in particular means increasing the flow table spread of the mineral binder composition, especially immediately after mixing the mineral binder composition with water. In the context of the present invention, the flow table spread can be measured according to standard EN 1015-3:2007.

"Adverse effects of ettringite on the effectiveness of a dispersant" is in particular the loss in flow table spread of the mineral binder composition, especially immediately after mixing the mineral binder composition with water.

As reference for determining the effectiveness and/or adverse effects, a mineral binder composition without the inventive polymer **P** but otherwise identical composition as the mineral binder composition of the inventive use can be taken.

If R and R' together form an alkylene chain, the alkylene chain preferably is an alkylene chain with at least 3 methylene groups, especially exactly 3 methylene groups. Put differently, in the latter case, R and R' together stand for a -CH₂-CH₂-CH₂- group or the momomer unit **M1** is N-vinyl-2-pyrrolidon, respectively.

With regard to the structure of the polymer **P,** the monomer unit **M1** preferably is selected from N-vinylformamide, N-vinylacetamide, N-methyl-N-vinylformamide, N-vinyl-2-pyrrolidon and/or N-methyl-N-vinylacetamide.

Especially preferred, the monomer unit **M1** comprises or consists of N-vinylformamide.

In another especially preferred embodiment, the monomer unit **M1** comprises or consists of N-vinyl-2-pyrrolidon.

According to a highly preferred embodiment, the polymer **P** is a homompolymer of monomeric unit **M1**, especially a homopolymer of N-vinylformamide or a homopolymer of N-vinyl-2-pyrrolidon.

Homopolymers have proven to be especially beneficial for achieving the inventive advantages while being readily producible.

However, in another preferred embodiment, the polymer **P** is a copolymer of the at least one monomer unit **M1** of formula I, especially N-vinylformamide, and at least one further monomer unit **M2**.

In particular, the at least one further monomer unit **M2** is different from monomer unit **M1**.

The at least one further monomer unit **M2** in particular is selected from vinyl-based monomers, allyl-based monomers, methallyl-based monomers, acryl-based monomers, methacryl-based monomers, isoprenolether-based monomers.

With additional monomers **M2**, the properties of the polymer **P** can further be adjusted to meet specific requirements in the mineral binder compositions.

Especially preferred, the at least one further monomer unit **M2** is selected from vinylacrylic acid, methacrylic acid, acrylamide, vinylamine, vinylalcohol, vinyl polyalkylene glycol, allyl polyalkylene glycol, methallyl polyalkylene glycol, isoprenolether polyalkylene glycol, polyalkylene glycol acrylate and/or polyalkylene glycol methacrylate.

In particular, the at least one further monomer unit **M2** includes a structure of the formula II: 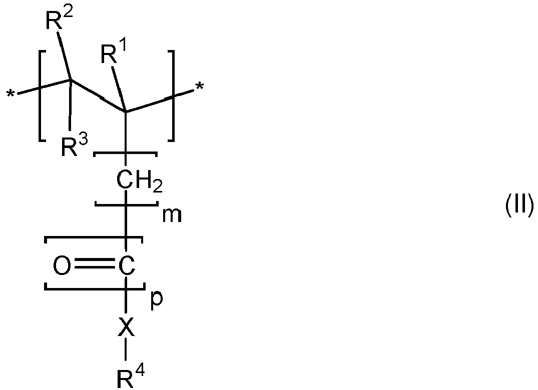 wherein
R¹, and R², in each case independently, are H or an alkyl group having 1 to 5 carbon atoms,
R³, in each case independently, is H, an alkyl group having 1 to 5 carbon atoms, preferably H or CH₃ or mixtures thereof, or a group with formula

   -(CH₂)ₘ-[C=O]ₚ-X-R⁴,
m = 0, 1 or 2,
p = 0 or 1,
X, in each case independently, is -O-, -NH-, or -O-(CH₂)₄-O-,
R⁴ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200.

More particularly, R¹ = H or CH₃ and R² = R³ = H.

The X group in monomer units **M2**, advantageously in at least 75 mol%, particularly in at least 90 mol%, especially in at least 95 mol% or at least 99 mol% of the total number of monomer units **M2**, is -O- (= oxygen atom).

In a further advantageous embodiment, m = 0, p = 1 and preferably X = -O-. In this case it is possible to prepare the copolymer on the basis of (meth)acrylic esters which are commercially available.

In another advantageous embodiment, m = 0 - 2, p = 0 and preferably X = -O-. Thereby, it is possible to prepare the copolymer on the basis of vinyl ether, (meth)allyl ether, or isoprenyl ether monomers which are commercially available.

In a particularly advantageous embodiment, R¹ is a mixture of 40-60 mol% of H and 40-60 mol% of -CH₃.

The R⁴ moiety in the side chain-bearing monomer units **M2,** based on the total number of R⁴ moieties in the monomer units, in particular consists of a poly(ethylene oxide), especially to an extent of at least 50 mol%, especially at least 75 mol%, preferably at least 95 mol% or at least 99 mol%.

The proportion of ethylene oxide units, based on the total number of alkylene oxide units in the copolymer, is especially more than 75 mol%, especially more than 90 mol%, preferably more than 95 mol% and specifically 100 mol%.

More particularly, R⁴ has essentially no hydrophobic groups, especially no alkylene oxides having three or more carbon atoms. This especially means that the proportion of alkylene oxides having three or more carbon atoms based on the total number of alkylene oxides is less than 5 mol%, especially less than 2 mol%, preferably less than 1 mol% or less than 0.1 mol%. In particular, there are no alkylene oxides having three or more carbon atoms present, i.e. the proportion thereof is 0 mol%.

R^{a} is advantageously H and/or a methyl group. Particularly advantageously, A = C₂-alkylene and R^{a} is H or a methyl group.

More particularly, n = 10-150, especially n = 15-100, preferably n = 17-70, specifically n = 19-45 or n = 20-25.

Especially, the polymer **P** does not comprise a monomer unit comprising a sulfonic acid group and/or a salt thereof. In particular, the polymer **P** does not comprise a monomer with the following structure: CH₂=CHR¹¹X¹¹R¹²SO₃X¹² with R¹¹ = H or methyl group; X¹¹ = CONH or COO; R¹² = a linear or branched alkylene group of 1 to 4 carbon atoms and X¹² = hydrogen, an alkali metal, ammonium salt or organic ammonium salt.

A weight-average molecular weight (M_{w}) of the polymer **P** preferably is from 500 - 60'000 g/mol, especially 1'000 - 50'000 g/mol, in particular 2'000 - 15'000 g/mol. The weight-average molecular weight (Mw) is determined by gel permeation chromatography (GPC), using polyethylene glycol (PEG) as standard.

Particularly, the polymer **P**, with respect to the total number of monomer units present in the polymer **P**, comprises or consists of:
a) 30 - 100 mol-%, especially 50 - 100 mol-%, particularly 60 - 100 mol-%, preferably 75 - 100 mol-%, of the monomer unit **M1** of formula I, especially of N-vinylformamide and/or N-vinyl-2-pyrrolidon;
b) Optionally, 0.1 - 70 mol-%, especially 1 - 50 mol-%, particularly 5 - 40 mol-%, preferably 10 - 25 mol-%, of the least one further monomer unit **M2**.

Especially, a molar proportion of the monomer unit **M1** of formula I, especially N-vinylformamide, is higher than a molar proportion of the at least one further monomer unit **M2**, especially the molar proportion monomer unit **M1** of formula I is at least equal to 1.1 times, in particular at least 1.5 times, especially 2 times, for example at least 5 times, the molar proportion of the at least one further monomer unit **M2**

In particular, a molar ratio of the monomer unit **M1** of formula I, especially N-vinylformamide, to the at least one further monomer unit **M2** preferably is from 1:1 to 100:1, especially 1.1:1 - 50:1, in particular 1.5:1 to 25:1.

The polymer is especially prepared by free-radical polymerization, e.g. by conventional free-radical polymerization or by controlled free-radical polymerization (also called living free-radical polymerization). These polymerization techniques are well known to the skilled person.

In particular, the polymer **P** is used in liquid or solid form.

For example, the polymer **P** can be provided in the form of a liquid admixture, especially dissolved or dispersed in a solvent, e.g. in water.

Also, the polymer **P** can be provided in the form of a solid admixture, e.g. in the form of a powder, optionally with a further powder, e.g. a carrier material and/or a filler material.

The polymer **P** preferably is used with a proportion of 0.0001 - 10 wt.-%, especially 0.001 - 5 wt.%, in particular 0.005 - 2 wt.-%, particularly 0.01 - 0.2 wt.-%, for example 0.01 - 0.1 wt.%, with respect to the total weight of the mineral binder in the mineral binder composition. With these proportion, the reduction of adverse effects of ettringite and/or the improvement of the effectiveness of the dispersant is best and at the same time hydration of the mineral binder composition with water is affected as less as possible.

The polymer **P** preferably is used in combination with a polycarboxylate ether dispersant.

A proportion of the polycarboxylate ether dispersant in particular is from 0.0001 - 10 wt.-%, especially 0.001 - 5 wt.%, in particular 0.01 - 2 wt.-%, especially 0.01 - 0.5 wt.-%, with respect to the total weight of the mineral binder in the mineral binder composition.

A weight ratio of the polymer **P** to the polycarboxylate ether dispersant in particular is from 0.01 - 2, especially 0.1 - 1, especially 0.2 - 0.8, for example 0.4 - 0.7.

The polycarboxylate ether preferably is a comb polymer **CP** with the following substructure units:
a) a molar parts of a substructure unit **S1** of the formula III: 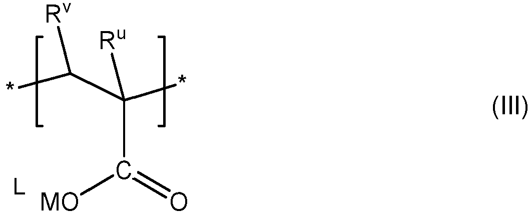
b) b molar parts of a substructure unit **S2** of the formula IV 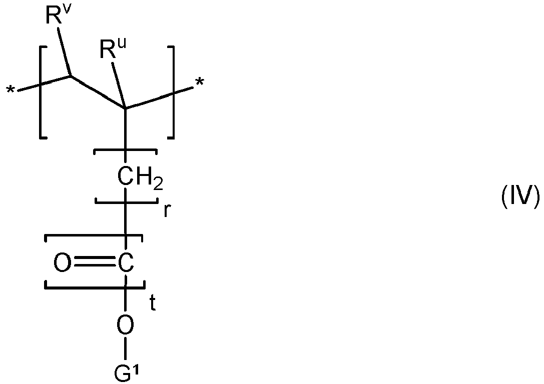
c) c molar parts of a substructure unit **S3** of the formula (V): 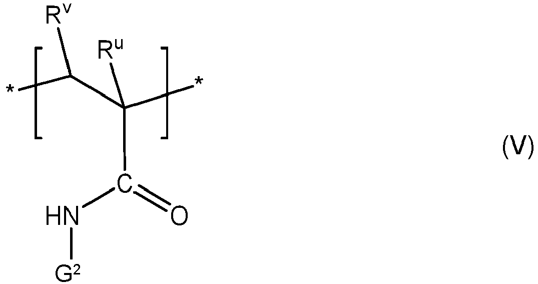
d) d molar parts of a substructure unit **S4** of the formula (VI) 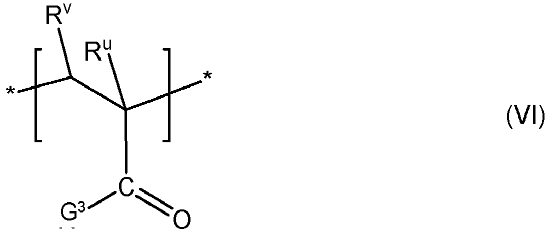 where
   L independently represents H⁺, an alkali metal ion, alkaline earth metal ion, a
      di- or trivalent metal ion, an ammonium ion or an organic ammonium group,
   each R^{u} independently of the others is hydrogen or a methyl group,
   each R^{v} independently of the others is hydrogen or COOM,
   r = 0, 1 or 2,
   t = 0 or 1,
   G¹ and G² is independently a C₁- to C₂₀-alkyl group, -cycloalkyl group,
      -alkylaryl group or is -(CH_{2)z}-(O)_{z'}-[A'O]ₛ-G⁴,
      where z = 0, 1, 2, 3, or 4, z' = 0 or 1, A' = C₂- to C₄-alkylene, G⁴ is H, a C₁- to C₂₀-alkyl group, -cycloalkyl group or -alkylaryl group,
      and s = 2-250,
   G³ is independently NH₂, -NG⁵G⁶, -OG⁷NG⁸G⁹,
      where G⁵ and G⁶ are independently
         a C₁- to C₂₀-alkyl group, -cycloalkyl group, -alkylaryl group or -aryl group,
         or are a hydroxyalkyl group or are an acetoxyethyl group (CH₃-CO-O-CH₂-CH₂-) or a hydroxyisopropyl group (HO-CH(CH₃)-CH₂-) or an acetoxyisopropyl group (CH₃-CO-O-CH(CH₃)-CH₂-);
      or G⁵ and G⁶ together form a ring of which the nitrogen is part, in order to construct a morpholine or imidazoline ring;
      G⁷ is a C₂-C₄-alkylene group,
      G⁸ and G⁹ each independently represent a C₁- to C₂₀-alkyl group, - cycloalkyl group, -alkylaryl group, -aryl group or a hydroxyalkyl group,
      and where a, b, c and d represent molar proportions of the respective substructure units **S1**, **S2**, **S3** and **S4**, with
      a/b/c/d = (0.1-0.9) / (0.1-0.9) / (0-0.8) / (0-0.8),
      especially a/b/c/d = (0.3-0.9) / (0.1-0.7) / (0-0.6) / (0-0.4),
      preferably a/b/c/d = (0.5-0.8) / (0.2-0.4) / 0 / 0
      and with the proviso that a + b + c + d = 1.

A "comb polymer" is a polymer comprising a polymer backbone and side chains bonded thereto.

The sequence of the substructure units **S1**, **S2**, **S3** and **S4** may be alternating, blockwise or random. It is also possible that the one or more substructure units **S1**, **S2**, **S3** and **S4** form a gradient structure. In principle, it is also possible that further structural units are present in addition to the substructure units **S1**, **S2**, **S3** and **S4**. In particular, the sequences of the substructure units **S1**, **S2**, **S3** and **S4** in the comb polymer **CP** are random or statistical.

Preferably, the substructure units **S1**, **S2**, **S3**, and **S4** together have a proportion of at least 50% by weight, especially at least 90% by weight, most preferably at least 95% by weight, of the total weight of the comb polymer **CP**.

In the comb polymer **CP**, R^{v} especially represents hydrogen and R^{u} is preferably hydrogen and/or a methyl group.

Preferably, in the comb polymer **CP**, r = 0 and t = 1. Also advantageously, r = 1-2 and t = 0.

More particularly, in the comb polymer **CP**, R^{v} is hydrogen, R^{u} is a methyl group, r = 1-2 and t = 0.

G¹ and/or G² in the comb polymer **CP**, in each case independently, are advantageously -[A'O]ₛ-G⁴ with s = 8-200, especially 20-70, and A' is a C₂- to C₄-alkylene. Thus, advantageously z = z' = 0.

In the comb polymer **CP**, G⁴, in each case independently, is preferably hydrogen or a methyl group.

Very particularly advantageous comb polymers **CP** are those where
a) the R^{u} and R^{v} moieties are hydrogen,
b) r = 0,
c) t = 1,
d) G¹ and G², in each case independently, are -(CH₂)_{z}-(O)_{z'}-[A'O]ₛ-G⁴ with z = z' = 0, s = 20-70 and
   A' = C₂-alkylene,
e) G⁴ represents a methyl group and/or
f) a/b/c/d = (0.5-0.8) / (0.2-0.4) / (0.001-0.005) / 0

Likewise advantageous polymers **CP** are those where
a) t = 0 and r = 1-2,
b) G¹, in each case independently, is -(CH₂)_{z}-(O)_{z'}-[A'O]ₛ-G⁴ with z = z' = 0, s = 8-200, especially 20-70,
c) G⁴ represents hydrogen or a methyl group, especially hydrogen,
d) and/or A' is a C₂- to C₄-alkylene, especially a C₂-alkylene.

A weight-average molecular weight (Mw) of the polymer **CP** is particularly in the range of 5'000-150'000 g/mol, preferably 10'000-100'000 g/mol, especially 20'000-90'000 g/mol. The weight-average molecular weight (Mw) is determined by gel permeation chromatography (GPC), using polyethylene glycol (PEG) as standard.

The preparation of comb polymers **CP** is known per se to the person skilled in the art. Corresponding superplasticizers or comb polymers **CP** are also commercially supplied by Sika Schweiz AG under the ViscoCrete^{®} trade name series.

The term "mineral binder" denotes a binder which reacts in the presence of water in a hydration reaction to form solid hydrates or hydrate phases. This can be, for example, a hydraulic binder, a latent hydraulic binder, and/or a pozzolanic binder. Highly preferred are hydraulic binders. Hydraulic binders can set under water. But it can also be advantageous for the mineral binder to contain other binders in addition to or instead of a hydraulic binder. These are, in particular, latent hydraulic binders and/or pozzolanic binders. Suitable latent hydraulic and/or pozzolanic binders are, e.g., slag, fly ash, silica dust and/or natural pozzolans. The mineral binder in the mineral binder composition comprises substances capable of forming ettringite during hydration of the mineral binder composition.

Especially, the mineral binder in the mineral binder composition comprises aluminate-containing phases and calcium sulfate. Aluminate containing phases are fore example tricalcium aluminate (C₃A), monocalcium aluminate (CA), tetra aluminate ferrate (C₄AF), dodecacalcium heptaaluminate (C₁₂A₇) and/or yeelimite (C4A3$).

In particular, the mineral binder comprises tricalcium aluminate and calcium sulfate. According to embodiments, the mineral binder comprises between 0.1 - 10 w%, preferably between 0.5 - 8 w%, more preferably between 1 - 7 w% of tricalcium aluminate, based on the total dry weight of the mineral binder. According to embodiments, the mineral binder comprises between 0.1 - 5 w%, preferably 0.5 - 3 w% of calcium sulfate, based on the total dry weight of the mineral binder.

After adding mixing water to the mineral binder, the aluminate-containing phases, such as tricalcium aluminate, and calcium sulfate will form ettringite in hydration reactions. Ettringite is a hydrous calcium aluminium sulfate mineral. Ettringite can be represented by the following formula: Ca₆Al₂(SO₄)₃(OH)₁₂·26H₂O.

In particular the mineral binder comprises or consists of cement, especially cement of type CEM I, CEM II, CEM III, CEM IV and/or CEM V (according to the standard EN 197-1). These types of cements may comprise tricalcium aluminate (C3A) as well as calcium sulfate in proportions up to 5 wt.% as minor component. Therefore, ettringite formation usually occurs in such cements.

In one preferred embodiment, with respect to the overall mineral binder content, the mineral binder contains at least 5 wt.-%, especially at least 20 wt.-%, preferably at least 35 wt.-%, especially at least 65 wt.-%, of hydraulic binder, especially cement, and, optionally, 5 to 95 wt.-%, especially 5 to 65 wt.-%, particularly 15 to 35 wt.-%, of latent hydraulic and/or pozzolanic binder.

According to embodiments, the mineral binder comprises clay (C), in particular calcined clay, limestone (LS), and Portland cement (PC) in the following weight ratios:
- PC : C is from 33 : 1 to 1 : 1, preferably from 8 : 1 to 1 : 1,
- C : LS is from 10 : 1 to 1 : 50 , preferably from 10 : 1 to 1 : 33, more preferably from 5 : 1 to 1 : 10, and
- PC : LS is from 20 : 1 to 1 : 4, preferably from 5 : 1 to 1 : 1.

Clays within the present context are solid materials composed to at least 30 w%, preferably to at least 35 w%, especially to at least 75 w%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, and micas, especially muscovite and illite, as well as mixtures thereof are especially preferred. Clay minerals within the present context can be any type of clay mineral, for example crude clays, low-temperature calcined clays, or high-temperature calcined clays. Crude clays are clay minerals extracted from e.g. a quarry, optionally purified and optionally dried. Low-temperature calcined clays are clays that have been thermally treated at temperatures between 500 - 1200°C. Such low-temperature calcination typically leads to removal of interlayer water and at least partial, preferably full, de-hydroxylation. For example, low-temperature calcined clay minerals may be produced in rotary kiln or in a flash calciner. High-temperature calcined clays are clay minerals that have been thermally treated at temperatures above 1200°C and typically between 1300 - 1400°C. High-temperature calcined clays typically are crystalline or contain high amounts of crystalline phases, especially of mullite.

Clays within the present context preferably are low-temperature calcined clays. A low-temperature calcined clay is a clay material that has been put to a heat treatment, preferably at a temperature between 500 - 1200 °C, or in a flash calcination process at temperatures between 800 - 1100 °C. A suitable flash calcination process is for example described in WO 2014/085538. A low-temperature calcined clay is an anhydrous material. It is preferred within the present context that during the calcination of clay the clay material is dehydroxylated to an amorphous material while the formation of crystalline high temperature aluminosilicate phases such as mullite is prevented. Low-temperature calcined clays, and especially low-temperature calcined kaolinite, generally are amorphous, have a significantly higher specific surface as compared to the original clay, and have a pozzolanic activity. According to especially preferred embodiments of the present invention, the calcined clay is metakaolin. Metakaolin is a material resulting from the low-temperature calcination of kaolinite or minerals that are rich in kaolinite, e.g. have a content of kaolinite of at least 30 w%, preferably to at least 35 w%, relative to its dry weight. Calcination temperatures for the manufacturing of metakaolin typically are in the range of 500 - 900 °C.

According to embodiments, the mineral binder consists to at least 65 wt.-%, preferably at least 80 wt.-%, more preferably at least 92 wt.-%, in each case relative to the total dry weight of the mineral binder, of clay, limestone, and Portland cement.

According to embodiments of the present invention, a mineral binder comprises a mixture of
a) 25 - 100 mass parts of Portland cement (PC),
b) 3 - 50 mass parts of clay (C), in particular calcined clay, especially of metakaolin,
c) 5 - 100 mass parts of limestone (LS).

According to further embodiments of the invention, the mineral binder comprises a mixture of
a) 5 - 95 w%, preferably 6 - 80 w%, of a slag based binder, said slag based binder comprising or consisting of
   a1) at least one ironmaking slag, preferably granulated blast furnace slag,
   a2) optionally a second slag which is different from a1), preferably basic oxygen furnace slag,
   a3) optionally a latent hydraulic and/or pozzolanic addition, preferably silica dust, natural pozzolanes, fly ash, and/or burnt oil shale,
b) 5 - 95 w%, preferably 20 - 94 w% of at least one co-binder, said co-binder being different from the slag based binder a) and said co-binder being selected from the group consisting of Portland cement, calcium aluminate cement, and/or calcium sulphoaluminate cement, especially Portland cement,
c) 0 - 10 w% of additives, especially activators.

A "mineral binder composition" is a composition comprising a mineral binder and optionally one or more further components, especially as described below. The mineral binder composition may be present in the form of a dry composition or in the form of a composition mixed with water.

The mineral binder composition furthermore may comprise aggregates. The term "aggregates" includes any type of mortar and/or concrete aggregates. In particular, the aggregates feature a density of 2.2 - 3 kg/dm³.

Especially, the aggregates include stone, gravel, sand powdered quartz, and/or limestone. However the aggregates may comprise or consist of lightweight aggregates, in particular foamed clay or polystyrene, or heavy aggregates, such as barite, iron ore and the like.

In particular, a grain size of the aggregates is at least 0.125 mm or at least 0.250 mm. Preferably, the grain size of the aggregates at most 125 mm or at most 32 mm. Especially, the grain size of the aggregates is 0.125 - 125 mm, especially from 0.125 - 32 mm, in particular from 0.125 - 16 mm, for example from 0.125 - 8 mm or from 0.125 - 5 mm.

Within the present context, the grain size is determined by sieve analysis, in particular with sieves featuring square openings. Especially, the grain size is expressed by the opening size of the test sieves just passed by the grains or particles concerned.

Additionally, the mineral binder composition may comprise an additive, especially selected from additives conventionally used in mortar or concrete compositions. Especially the additive is selected from plasticizers, accelerators; corrosion inhibitors; retarders; shrinkage reducers; antifoams, and/or foam-formers. Thereby, the additive is chemically and/or physically different from the dispersant and the polymer **P.**

A proportion of the additive in particular is from 0.0001 - 10 wt.-%, especially 0.001 - 5 wt.%, in particular 0.01 - 2 wt.-%, with respect to the total weight of the mineral binder in the mineral binder composition.

Especially, the mineral binder composition is a grout, a mortar or a concrete composition.

For preparing the mineral binder composition, mixing water is added.

Preferably, a ratio of water to mineral binder in the mineral binder composition in particular is from 0.25 - 0.8, especially 0.3 - 0.6, for example 0.4 - 0.5.

Especially, the polymer P is added to the mineral binder composition before the mixing water is added to the mineral binder composition. Thereby, the polymer P preferably is homogeneously mixed with the other components of the mineral binder compositions. In this case, for example, the polymer **P** can be added in the form of a solid or a liquid admixture as described above.

This ensures, that the polymer **P** is present in the mineral binder composition when the hydration reaction and the formation of ettringite starts.

In particular, the polymer **P** is added to the mineral binder composition before adding the dispersant.

Especially, the polymer **P** is added to the mineral binder during production of the mineral binder, e.g. in a cement mill, especially by intergrinding the polymer **P** with the mineral binder. Thereby, the proportion of the polymer can be adjusted to the nature of the mineral binder, e.g. the proportion of sulfate and/or aluminate phases in the mineral binder.

In particular, the polymer **P** can be provided as an admixture comprising the polymer **P,** the dispersant and optionally further additives. This simplifies the use of the polymer **P** since proportions can be fixed.

However, the polymer **P** can be added independently of further additives or components of the mineral binder composition. This is most flexible since the proportion of the polymer **P** can be adjusted independently of other components or additives as desired. Thereby, for example, the polymer **P** can be added together with the dispersant and/or after the dispersant.

A further aspect of the present invention is directed to a mineral binder or to a mineral binder composition comprising a polymer **P** and a dispersant as described above. In particular, the mineral binder and the mineral binder composition are defined as described above. Especially, the mineral binder or the mineral binder composition comprises substances capable of forming ettringite during hydration of the mineral binder composition, especially tricalcium aluminate (C₃A) and calcium sulfate.

According to special embodiments, the mineral binder composition comprising the mineral binder, polymer **P,** and water, has a content of solubilized aluminates and of solubilized sulphates. Especially, the content of solubilized aluminates and of solubilized sulphates is such that a molar ratio of aluminate : sulphate of appr. 2:3 results.

Another aspect is directed to a kit of parts comprising a polymer **P** as described above and a dispersant for mineral binder compositions, especially a polycarboxylate ether which is chemically and/or structurally different from the polymer **P**. In particular, the kit of parts is present as a one-, two-, or multi-component admixture. In the two- or multi-component admixture, the polymer **P** and the dispersant preferably are provided as spatially separated components.

A still further aspect is directed to a method, in particular a method for plasticizing a mineral binder composition, comprising the steps of adding to a mineral binder composition a polymer **P** as described above and a dispersant for mineral binder compositions as described above.

Further advantageous embodiments and combinations of features of the invention will emerge from the following exemplary embodiments and the totality of the patent claims.

### Exemplary embodiments

### Mortar mixtures

The efficacy of polymers **P** according to the invention were tested in different mortar composition.

A first mortar mixture **MH** was based on a mineral binder forming high amounts of ettringite. A second mortar mixture **ML** was based on a binder forming low amounts of ettringite. The dry composition of the mortars are described in table 1.

**Table 1:**

| **Component** | **MH** | **ML** |
|---|---|---|
| Binder [g] | | |
| - CEM I 42.5 N | 306 | - |
| - Calcined Clay | 90 | - |
| - Limestone | 45 | - |
| - Gypsum | 9 | - |
| - CEM II/A-LL 42.5 N | - | 450 |
| Sand [g] | 1350 | 1350 |

For the mixing of the mortar mixtures, the binder and the sand were mixed in the dry state for 1 minute in a Hobart mixer. Within 30 seconds, the mixing water (225 g; w/b = 0.5) was added and mixed for an additional 2.5 minutes. The total wet mixing time was 3 minutes in each case.

Depending on the specific experiment, a polymer **P** and/or a dispersant was added together with the mixing water as indicated in table 2.

### Tests

For the determination of the effectiveness of polymers **P,** the respective flow table spread (FTS) was measured at 5, 30, 60, 90 and 120 minutes after mixing in line with standard EN 1015-3:2007.

Furthermore, heat flow calorimetry with sample of the mortar compositions was carried out by means of isothermal calorimetry at 23°C. The calorimetry curves represent the energy liberated in [W/g mineral binder] as a function of time [h] in the mortar mixture test specimen. The evolution of heat is due to the exothermic reaction of the silicate phases in the mineral binder with water. The maximum of the curve obtained by calorimetry can be correlated with the strength development in the cement, i.e. a maximum occurring at an earlier time means an earlier development of early strength in the component.

### Results

Results of different experiments performed are shown in table 2.

**Table 2:**

| Experiment | **R1** | **R2** | **R3** | **R4** | **A1** | **A2** | **A3** |
|---|---|---|---|---|---|---|---|
| Mortar recipe | **MH** | **MH** | **MH** | **ML** | **MH** | **MH** | **MH** |
| Polymer **P** [wt.%] | | | | | | | |
| - PVFA¹⁾ | - | | 0.03 | - | 0.03 | 0.06 | - |
| - PVP²⁾ | - | | - | - | - | - | 0.03 |
| Dispersant³⁾ [wt.%] | - | 0.11 | - | - | 0.11 | 0.11 | 0.11 |
| FTS [mm] | | | | | | | |
| - 5 min | 148 | 185 | 146 | 186 | 196 | 217 | 209 |
| - 30 min | 145 | 173 | - | 173 | 190 | 207 | 212 |
| - 60 min | 140 | 165 | - | 167 | 182 | 196 | 199 |
| - 90 min | 135 | 159 | - | 160 | 172 | 188 | 189 |
| Silicate hydration peak [min] | 510 | 635 | 530 | 480 | 670 | 646 | 675 |

| | | | | | | | |
|---|---|---|---|---|---|---|---|
| ¹⁾ Poly(N-vinyl formamide); wt.% with respect to binder ²⁾ Polyvinylpyrrolidone (Mw = 10'000 g/mol); wt.% with respect to binder ³⁾ Sika Viscocrete; Polycarboxylate ether-based dispersant; wt.% with respect to binder | | | | | | | |

Experiment **R1**, shows that the initial flow (5 min after preparation) of the mortar composition without any dispersant is rather low, i.e. 146 mm, and the silicate hydration peak is around 510 minutes. When adding a dispersant without an inventive polymer **P** (cf. experiment **R2**), the initial flow can be improved to 185 mm whereas the silicate hydration peak shifts to later times.

Addition of an inventive polymer **P** without any dispersant (cf. experiment **R3**) does not improve the flow of the mortar composition and the silicate hydration peak shifts only slightly to later times. Thus it can be concluded that the polymer **P** as such does not have a dispersing effect and hardly influences hardening times.

However, when using polymer P in combination with a dispersant (experiments **A1** - **A3**), the flow at all times is significantly improved when compared to the reference example **R2** whereas the hardening is only very slightly delayed. Thus, it can be concluded that the inventive polymers **P** indeed are capable of improving the effectiveness of dispersants in a mineral binder composition forming ettringite or to reduce adverse effects of the ettringite on the effectiveness of the dispersant.

Whereas experiments **R1** - **R3** all have been done with mortar mixes **MH** forming rather high amounts of ettringite, in experiment **R4**, mortar mix **ML** with a mineral binder comprising less aluminate was used. Even without a dispersant, this results in a much better flow, which is comparable to the flow of experiment **R2.** However, to obtain these results, the whole mortar formulation needs to be changed. Thereby, binders from different plants, regions, types, or even between production lots can easily vary in their composition and thus lead to different level of ettringite formation. This can have an impact on the robustness of the dispersant. The inventive solution therefore is much more flexible. Especially, it can be used to solve problems with ettringite formation in essentially any kind of mortar or concrete composition, even when binder compositions vary between different production lots form one and the same plant.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. Use of a polymer **P** for improving the effectiveness of a dispersant, in particular a polycarboxylate ether-based dispersant, in a mineral binder composition forming and/or comprising ettringite, and/or for reducing or inhibiting adverse effects of ettringite on the effectiveness of a dispersant in a mineral binder composition, said polymer **P** comprising:
a) at least one monomer unit **M1** of formula I:
CH₂=CHNRCOR' (I)
whereby R and R' independently of each other is a hydrogen atom or a methyl group, or where R and R' together form an alkylene chain so as to provide, together with the N atom and the C atom to which they are attached, a cyclic structure, especially a five membered ring;
b) optionally at least one further monomer unit **M2**.

2. Use according to claim 1, whereby monomer unit **M1** is N-vinylformamide and/or N-vinyl-2-pyrrolidon.

3. Use according to any of preceding claims , whereby the polymer **P** is a homompolymer of N-vinylformamide or a homopolymer of N-vinyl-2-pyrrolidon.

4. Use according to any of claims 1 - 2, whereby the polymer **P** is a copolymer of the at least one monomer unit **M1** of formula I, especially N-vinylformamide, and at least one further monomer unit **M2**.

5. Use according to any of preceding claims, whereby the at least one further monomer unit **M2** is selected from vinyl-based monomers, allyl-based monomers, methallyl-based monomers, acryl-based monomers, methacryl-based monomers, isoprenolether-based monomers.

6. Use according to any of preceding claims, whereby the at least one further monomer unit **M2** is selected from vinylacrylic acid, methacrylic acid, acrylamide, vinylamine, vinylalcohol, vinyl polyalkylene glycol, allyl polyalkylene glycol, methallyl polyalkylene glycol, isoprenolether polyalkylene glycol, polyalkylene glycol acrylate and/or polyalkylene glycol methacrylate.

7. Use according to any of preceding claims, whereby the at least one further monomer unit **M2** includes a structure of the formula I 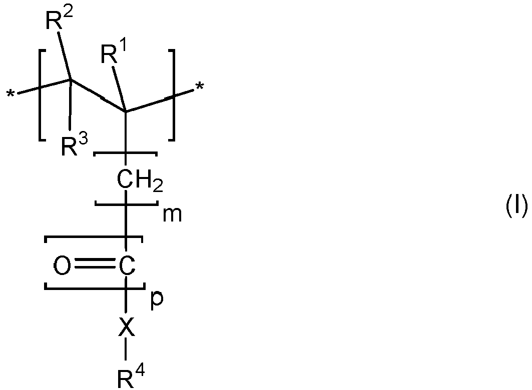 wherein
R¹, and R², in each case independently, are H or an alkyl group having 1 to 5 carbon atoms,
R³, in each case independently, is H, an alkyl group having 1 to 5 carbon atoms, preferably H or CH₃ or mixtures thereof, or a group with formula
-(CH₂)ₘ-[C=O]ₚ-X-R⁴,
m = 0, 1 or 2,
p = 0 or 1,
X, in each case independently, is -O-, -NH-, or -O-(CH₂)₄-O-,
R⁴ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200.

8. Use according to any of preceding claims, whereby a weight-average molecular weight (M_{W}) of the polymer **P** is from 500 - 60'000 g/mol, especially 2'000 - 50'000 g/mol, in particular 2'000 - 15'000 g/mol.

9. Use according to any of preceding claims, whereby the polymer **P**, with respect to the total number of monomer units present in the polymer **P**, comprises:
a) 30 - 100 mol-%, especially 50 - 100 mol-%, particularly 60 - 100 mol-%, preferably 75 - 100 mol-%, of the monomer unit **M1** of formula I, especially of N-vinylformamide;
b) Optionally, 0.1 - 70 mol-%, especially 1 - 50 mol-%, particularly 5 - 40 mol-%, preferably 10 - 25 mol-%, of the least one further monomer unit **M2**.

10. Use according to any of preceding claims, whereby a molar ratio of the monomer unit **M1** of formula I, especially N-vinylformamide, to the at least one further monomer unit **M2** is from 1:1 to 100:1, especially 1.1:1 - 50:1, in particular 1.5:1 to 25:1.

11. Use according to any of preceding claims, whereby the polymer **P** is used with a proportion of 0.0001 - 10 wt.-%, especially 0.001 - 5 wt.%, in particular 0.005 - 2 wt.-%, particularly 0.01 - 0.2 wt.-%, for example 0.01 - 0.1 wt.%, with respect to the total weight of the mineral binder in the mineral binder composition.

12. Use according to any of preceding claims, whereby the polymer **P** is used in combination with a polycarboxylate ether dispersant.

13. Use according to any of preceding claims, whereby the polymer **P** is added to the mineral binder or mineral binder composition before mixing water is added to the mineral binder composition.

14. Use according to any of preceding claims, whereby a mineral binder in the mineral binder composition comprises tricalcium aluminate (C₃A) and calcium sulfate.

15. A mineral binder composition comprising substances capable of forming ettringite during hydration of the mineral binder composition, especially tricalcium aluminate (C₃A) and calcium sulfate, the mineral binder composition further comprising a polymer **P** as defined in any of claims 1 - 14, and optionally a polycarboxylate ether dispersant.
